Europäisches Patentamt

European Patent Office

Office européen des brevets

(19)

(11) Publication number: **0 157 594**
**A2**

# EUROPEAN PATENT APPLICATION

(12)

(21) Application number: **85302148.3**

(22) Date of filing: **27.03.85**

(51) Int. Cl.⁴: **A 23 P 1/16**, A 47 J 43/12, A 23 L 1/19

(30) Priority: **27.03.84 US 593746**

(43) Date of publication of application: **09.10.85** Bulletin 85/41

(84) Designated Contracting States: **DE FR GB**

(71) Applicant: **GENERAL FOODS CORPORATION, 250 North Street, White Plains, N.Y. 10625 (US)**

(72) Inventor: **Bruins, Henderikus Berendinus, RRI Box 153 B, Cream Ridge New Jersey 98514 (US)**
Inventor: **Gonsalves, Alexander Augustine, 717 Chestnut Lane, Yardley Pennsylvania 19067 (US)**
Inventor: **Ragon, Robert, P.O. Box. 221, Monomomie Wisconsin 54751 (US)**
Inventor: **Dell, William Joseph, 99, Pye Lane, Wapping Falls, N.Y. 12590 (US)**

(74) Representative: **Baillie, Iain Cameron et al, c/o Ladas & Parry Isartorplatz 5, D-8000 München 2 (DE)**

(54) **A process for aerating an emulsion.**

(57) The invention discloses a process for making an aerated emulsion comprising the steps of combining and blending ingredients in a manner effective to produce an emulsion; forcing said emulsion through a conduit; injecting a air stream into said emulsion through a sintered metal sparger; shearing off air bubbles formed on the surface of the sparger; and passing said aerated emulsion through a continuous mixer located between 1/2 and about 10 inches from the sintered metal sparger.

EP 0 157 594 A2

ACTORUM AG

Case 3291

## DESCRIPTION

## A PROCESS FOR AERATING AN EMULSION

## BACKGROUND OF THE INVENTION

### FIELD OF INVENTION

The present invention relates to an improved process for preparing an aerated emulsion wherein air is incorporated into an emulsion through a sparger.

### DESCRIPTION OF PRIOR ART

Conventionally aerated or whipped cream products are prepared by pumping air and cream simultaneously through a flow path and through a whipping means such as a Hobart mixer or the like, wherein air and cream are mixed.

Several attempts have been made to increase the amount of air that is absorbed by cream and to decrease the size of the air bubbles therein. For instance, British Pat. No. 694,918 by Gibbs discloses, a process for diffusing gases which provides readily adjustable control over the size of air bubbles produced in the liquid initially and the capability of attaining large numbers of small uniform bubbles. This is accomplished by introducing gas into a flowing body of the liquid, wherein the gas is first passed through a barrier membrane permeable to the gas and capable of subdividing it into a vast number of fine streams which emerges from the barrier in an area where the barrier is in contact with the liquid. In the above system the bubbles formed on the barrier at the point they emerge from the gas stream are swept away from the barrier by the liquid before they have a chance to grow to a size greater than optimum.

The problem with the above process is that the bubbles once swept away from the barrier by the liquid coalesce especially at high overruns, forming larger bubbles which decreases the amount of air bubbles incorporated into the emulsion, the likelihood of further coalescense and decreasing the percentage of overrun.

Also, when air is introduced into the dairy emulsion, that is, an emulsion having milk components ranging from 2 to 30.0%, through a metal sparger then into a continuous mixer, the overrun achieved is far below that of the non-dairy formulation. The introduction of dairy components in the emulsion increases the solids as well as the viscosity upon cooking. Dairy ingredients tend to destabilize the protein film and the fat crystal lattice which are critical to aeration and freeze thaw stability.

There are several references that disclose various systems for whipping cream, which are of interest. These references are; Swiss Pat. No. 371,070 by Nozzle; U.S. Pat. No. 4,144,293 by Hamoto et al; U.S. Pat. No. 3,758,080 by MacManus and U.S. Pat. No. 1,922,749 by Roush.

In the prior art, increasing the production capacity of diary emulsion whip topping has been limited due to the difficulty of incorporating air at high production rates.

- 3 -

It is therefore the object of the present invention to increase the production capacity of the air emulsion whipping process.

Another object of the present invention is to improve the quality, uniformity, appearance and stability of dairy emulsion whipped toppings.

A further object of the invention is to achieve air incorporation through a continuous process which uses less mechanical shear.

Still a further object of the invention is decrease the flow of air contacting the emulsion.


## SUMMARY OF THE INVENTION

This invention pertains to a process for making an aerated emulsion comprising the steps of: combining fats, protein, emulsifer, stabilizer and water in a manner effective to produce an emulsion; forcing said emulsion through a conduit; injecting an air stream in said conduit containing the emulsion through a sintered metal sparger having hole sizes ranging from 0.5 to 100 microns; shearing off air bubbles formed on the surface of the sparger; and passing said emulsion with air bubbles through a continuous mixer located at a distance ranging from 1/2 to 15 inches from the sintered metal sparger.


## BRIEF DESCRIPTION OF THE DRAWING

The features of the present invention will become more fully apparent from the following description taken in conjunction with the preferred embodiment thereof with reference to the accompanying drawing which is given by way of illustration only, and thus are not limited to the present invention.

- 4 -

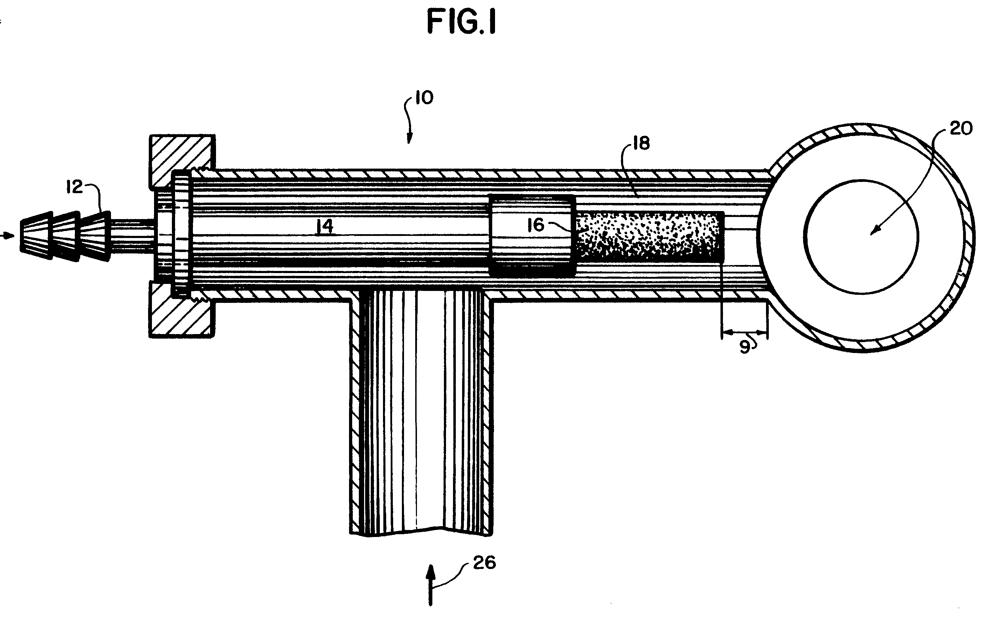

Fig. 1 is a cross-sectional view of the sparger and continuous mixer as used in the present invention for aerating an emulsion.

DETAILED DESCRIPTION OF THE INVENTION

The present invention teaches a process for making an aerated emulsion wherein the first step comprises combining and blending ingredients in a manner effective to produce an emulsion. The emulsion can either be a dairy or non-dairy. A preferred range of ingredients for the non-dairy emulsion is as follows:

| Ingredients | Percent by weight |
|---|---|
| Fat | 9 to 30.0 |
| Protein | 0.5 to 2.0 |
| Emulsifier | 0.4 to 2.0 |
| Stabilizer (gum) | 0.01 to 2.0 |
| Water | 40.0 to 60.0 |
| Carbohydrate (sugar) | 20.0 to 30.0 |
| Flavoring Agent | 0.1 to 2.0 |
| Coloring Agent | 0.01 to 0.05 |

A preferred range of ingredients for the dairy emulsion is as follows:

| Ingredients | Percent by weight |
|---|---|
| Milk Components | 2 to 30 |
| Fats | 9 to 30 |
| Protein | .5 to 2 |
| Emulsifier | .4 to 2 |
| Stabilizer (gum) | .01 to 2 |
| Water | 40 to 60 |

- 5 -

| Carbohydrate (sugar) | 20 | to | 30 |
| Flavoring Agent | 0.1 | to | 2.0 |
| Coloring Agent | 0.01 | to | 0.05 |

The blend of fat, milk components, emulsifier, stabilizer and water are homogenized, then cooled, as more fully set out in U.S. Pat. No. 3,431,117 by Lorant which is herein incorporated by reference.

In order to achieve the desired overrun according to the present invention, that is, an overrun of between about 200 to 350 when both dairy and non-dairy emulsions are aerated, a sintered metal sparger as shown in Fig. 1 is used as a means for injecting air into the emulsion, in conjunction with placing said sparger mechanism as close as possible to a continuous mixer also shown in Fig. 1.

According to the present invention the homogenized emulsion is aerated by introducing the air as shown in Fig. 1 through an air inlet 12 into a flowing body of the liquid, the air being first passed through a sparger 16 capable of subdividing the air into small air bubbles which emerges from the sparger in the area of contact of the sparger and the liquid.

First, the emulsion is forced continuously through a conduit 26 such as a tube. The pressure of the emulsion passing through the conduit 26 should be about 40 to 80 psig, preferably about 55 to 75 psig. The temperature of the emulsion should be about 35°F to 45°F preferably about 38°F to about 42°F.

As shown in Fig. 1, a sparger 16 or a simple tube is extended into the emulsion stream so that the continuous flow of the emulsion passes over the sparger surface. It is preferred in the present invention that the sparger be a sintered metal sparger. By the term sintered metal sparger is meant a porous metal sparging tube. The length of the sparger 16 should be about 1/2 to about 8 inches, preferably between about 1 inch and 3 inches. The holes in the sparger 16 should be of a size ranging from about 0.5 microns to about 100 microns, preferably between about 5 microns and about 25 microns and more preferably about 5 microns.

Air is metered in through a sparger extension tube 14 and is forced by a pressure differential through the micron size holes in the sparger 16. The metered air form small bubbles on the surface of the sparger 16 at the point of emergence of the air. These small air bubbles are swept away (sheared off) by the high velocity emulsion stream flowing through the annulus around the sparger 18 from the surface of the sparger before they have a chance to grow into larger bubbles.

The velocity of the liquid flow past the sparger is controllable and is usually maintained between 0.5 and 5 ft/sec. and preferably between 0.5 and 2 feet per second, with the porosity of the sparger being such as to provide bubbles having very small sizes at a selected velocity. The liquid is usually pumped pass the sparger. The necessary pressure differential between the air pressure of the sparger and the liquid is provided by creating a partial vacuum within the conduit 26 and the annulus around the sparger 18 confining the liquid so that the air is drawn through the micron size holes of the sparger into the liquid. As a preferred option, the air may be placed under a pressure sufficient to force it through the sparger 16 into the liquid, such as pumping.

An advantage of the present invention is that a much smaller air bubble is injected into the emulsion stream which increases the amount of air that is incorporated therein.  Sufficient air is incorporated to produce a final whipped overrun of from 200% to 350% preferably about 255 to 300 overrun.

The sintered metal sparger has a diameter of about 1/2 inch, with a length ranging from 1 to 3 inches preferably about 1 1/2 inches.  The metal tube or conduit 10 in which the sparger is located has a diameter of 1 inch, twice as large as the sparger.  This allows sufficient room for the emulsion to contact the air bubbles as they emerge from the sparger, shearing them off before they have a chance to enlarge.  The diameter of the sparger and the conduit can vary in size, provided that there is sufficient room for the emulsion to shear off the air bubbles as they emerge from the sparger.

A significant problem in the art is the coalescence of small air bubbles.  An important feature of the present invention is the position of the continuous mixer 20 in relation to the sparger 16.  In order to minimize or reduce coalescense according to the present invention the distance between the sparger 16 and the continuous mixer 20 as shown by line 9 should be as close as possible.  This distance should range from 1/2 to 15 inches preferably between about 1/2 inch and 4 inches.

In the continuous mixer the air bubble size is reduced and disperced even further and more significantly the protein in the emulsion migrates toward the air/water interface and forms a film around the air bubble.  This accounts for the uniformity, quality, appearance and stability of the emulsion.  Also to achieve the desired result less mechanical shear is required in the continuous mixer decreasing the mechanical damage to the protein film responsible for the encapsulation of the air bubbles.

Also, an important feature of the present invention is the ability to decrease the velocity of the continuous mixer and significantly reduce the amount of air being pumped into the emulsion, while increasing the amount of air that is incorporated and maintaining the same overrun as in the conventional system. This allows for an increase in the flow rate, thereby creating a more efficient and cost-effective system.

As the aerated emulsion exits the continuous mixer, the pressure of said emulsion is reduced in a continuous manner to about atmospheric, that is, from as high as about 80 psig to atmosphere. Means of reducing the pressure are conventional means such as conveying the emulsion through a tubing or pipe or series of tubings or pipes for a sufficient length and at a sufficient diameter to accomplish the said pressure reduction. The pressure reduced aerated emulsion is then whipped. The whipping occurs at a whipping temperature of about 30°F to about 60°F. Suitably the whipping can be done in a scraped surface heat exchanger and suitably the product temperature is controlled by circulating refrigerant through the heat exchanger jacket. However, in the present invention it is preferred that the whipping occurs in a Hobart mixer.

Effective shearing of the emulsion must occur during the whipping in order to produce a suitable product having an overrun of 200% to 350% and preferably of 255% to 300%. If too little shear is employed a soupy product will occur and if too great a shear is employed then the product will appear to be hard and unacceptable. In order to determine the proper shear that is required to give the desired overrun one merely increases or decreases the speed of rotation of the Hobart blade as is readily apparent to one skilled in the art. According to the present invention the whipping of the emulsion is at a Hobart speed of between 100 and 120 rpm.

This process can also be utilized in cases where an aerated emulsion is desired, such as whipped toppings, puddings, ice cream and the like.

After the emulsion has been whipped to a desired overrun, the product is then packaged. After the whipped emulsion is packaged it may be frozen and then sold to the consumer.

The following examples are presented to further illustrate the invention but it is to be understood that the invention is not limited to the details of these examples.

### EXAMPLE I

A dairy emulsion was prepared by blending the following composition: 2.3% non-fat dry milk; 25.4% hydrogenated vegetable oil (fat); 23.6% sugar; 1.5% sodium caseinate (protein); 0.5% polysorbate 60, sorbitan monostearate; 0.1% xanthan gum, guar gum; 46.3% water (all percent by weight) and the remainder; natural and artificial flavoring and coloring agents. The blend was homogenized in a two stage homogenizer. (Gaulin model M3) at an 8-10 pound per minute flow rate. Homogenizing pressures were: second stage 600 psig; and first stage 8000 psig. The homogenized product was then cooled in a two stage plate cooler to 40°F. The heat exchange medium was water and glycol. The cooled product was accumulated in a jacketed tank for fat solidification purpose. Product temperature was maintained at 40°F for a maximum of 3 hours.

The 40% emulsion was then pumped at a flow rate of 0.28 lbs/sec. and a pressure of 50 psig over a sintered metal sparger (5 microns) to a continuous mixer (6" CR mixer) wherein the sintered metal sparger was located at the inlet to the continuous mixer, a distance of 10 inches from said continuous mixer. Air is added to the emulsion through the sintered metal sparger. The air was added at a rate of 0.0175 cubic feet/sec., which results in an overrun of 260%.

The continuous mixer further incorporates the air into the emulsion at a speed of 600 rpm. The aerated emulsion then flows through a tygon hose of specific length and diameter (L=17 1/2 ft; internal diameter 5/8") to release to pressure gradually. The end of the tygon tube is attached to the bottom of a 20 quart Hobart bowl wherein the product is whipped to its final viscosity. The speed of the Hobart whip determines the viscosity of the final whipped product. In this example the speed of the Hobart whip was 112 rpm and the resultant viscosity was 42" on a Brookfield Hat, 5 rpm, TD Spindle. The finished product floats to the top and overflows the Hobart bowl where it was caught for product and process evaluation.

## EXAMPLE II

A non-dairy emulsion was prepared by blending the following composition: 25.5% hydrogenated vegetable oil (fat); 23.6% sugar; 1.5% sodium caseinate (protein); 0.5% polysorbate 60, sorbitan monostearate; .11% xanthan gum, guar gum; 48.6% water (all % by weight) and the remainder; natural and artificial flavoring and coloring agents. The blend was homogenized in a two stage homogenizer. (Gaulin model M3) at an 8-10 pound per minute flow rate. Homogenizing pressures were: second stage 600 psig; and first stage 8000 psig. The homogenized product is then cooled in a two stage plate cooler to 40°F. The heat exchange medium is water and glycol. The cooled product is accumulated in a jacketed tank for fat solidification purpose. Product temperature is maintained at 40°F for a maximum of 3 hours.

The emulsion (40°F) is then pumped at a flow rate of 0.28 lbs/sec. and a pressure of 50 psig over a sintered metal sparger (5 microns) to a continuous mixer (6" CR mixer) wherein the sintered metal sparger is located at the inlet to the continuous mixer, a distance of 10 inches from said continuous mixer. Air is added to the emulsion through the sintered metal sparger. The air is added at a rate of 0.0175 cubic feet/sec., which results in an overrun of 300%.

The continuous mixer further incorporates the air into the emulsion at a speed of 600 rpm. The aerated emulsion then flows through a tygon hose of specific length and diameter (L=17 1/2 ft; internal diameter 5/8") to release the pressure gradually. The end of the tygon tube is attached to the bottom of a 20 quart Hobart bowl wherein the product is whipped to its final viscosity. The speed of the Hobart whip determines the viscosity of the final whipped product. In this example the speed of the

- 12 -

Hobart whip was 112 rpm and the resultant viscosity is 42" on a Brookfield Hat, 5 rpm, TD spindle. The finish product floats to the top and overflows the Hobart bowl where it is caught for product and process evaluation.

0157594

- 13 -

CLAIMS

1.    A process for making an aerated emulsion comprising the steps of:

(a)   combining and blending a mixture comprising fats, protein, emulsifier, stabilizer and water in a manner effective to produce an emulsion;

(b)   forcing said emulsion through a conduit;

(c)   injecting an air stream in said emulsion through a sintered metal sparger having hole sizes ranging from 0.5 to 100 µm (microns).

(d)   shearing off air bubbles formed on the surface of the sparger; and

(e)   passing said emulsion with air bubbles through a continuous mixer located at a distance from 1.25 cm to 38.1 cm (0.5 to 15 inches) from the sparger.

2.    A process according to Claim 1 wherein the temperature of the emulsion ranges from 1.7 to 7.2°C (35 to 45°F).

3.    A process according to Claim 2 wherein the temperature of the emulsion ranges from 3.3 to 5.6°C (38 to 42°F).

4.    A process according to Claim 1 wherein the emulsion is forced through conduit at a gauge pressure ranging from  276 to 552 kPa (40 to 80 psig).

5.    A process according to Claim 4 wherein the emulsion is forced through conduit at a gauge pressure ranging from  379.5 to 517.5 kPa (55 to 75 psig).

6.    A process according to Claim 1 wherein the size hole in the sparger ranges from 5 to 25 µm (microns).

7.    A process according to Claim 7 wherein the size hole in the sparger is 5 µm (microns).

8.    A process according to Claim 1 wherein the air bubbles are sheared off the sparger by the emulsion stream traveling at a velocity of from 0.15 to 1.52 m/sec (0.5 to 5 ft/sec.).

- 14 -

9. A process according to Claim 8 wherein the emulsion stream is traveling at a velocity of 0.15 to 0.6 m/sec (0.5 to 2 ft./sec).

10. A process according to Claim 1 wherein the distance from the continuous mixer to the sparger ranges from 1.27 to 1.016 cm (½ to 4 inches).

11. A process according to Claim 1 comprising a further step of pressure reducing the aerated emulsion to about atmospheric in a gradual manner.

12. A process according to Claim 1 comprising a further step of whipping the pressure reduced emulsion at atmospheric conditions to its final viscosity.

13. A process according to claim 12 wherein the whipping of the emulsion occurs in a Hobart bowl.

14. A process according to Claim 13 wherein the whipping of the emulsion is at a Hobart speed of between about 100-120 rpm.

15. A process according to Claim 12 wherein the whipping of said gas incorporated emulsion is to an overrun of 200% to 350%.

16. A process according to Claim 15 wherein the whipping of said gas incorporated emulsion is to an overrun of 255 to 300.

17. A process according to Claim 1 wherein said ingredients comprises between about 9% to about 30% by weight, lipid; between about 20 and about 30% by weight carbohydrate, and between about 40% and about 60% by weight water.

18. A process according to Claim 1 wherein said ingredients comprises between 2% to about 30% by weight Milk components; between about 9% to about 30% by weight lipid; between about 20% to about 30% by weight carbohydrate and between about 40% and about 60% by weight water.

# FIG.1